Europäisches Patentamt

European Patent Office

Office européen des brevets

(19)

(11) Publication number: 0 397 592
A2

(12) **EUROPEAN PATENT APPLICATION**

(21) Application number: 90630088.4

(22) Date of filing: 10.04.90

(51) Int. Cl.5: **B64C 11/50, G05D 13/62, B64D 31/12**

The title of the invention has been amended (Guidelines for Examination in the EPO, A-III, 7.3).

(30) Priority: 11.04.89 US 336275

(43) Date of publication of application:
14.11.90 Bulletin 90/46

(84) Designated Contracting States:
DE ES FR GB IT SE

(71) Applicant: **UNITED TECHNOLOGIES CORPORATION**
United Technologies Building 1, Financial Plaza
Hartford, CT 06101(US)

(72) Inventor: **Schneider, Roy W.**
29 Gail Drive
Ellington, Connecticut 06029(US)

(74) Representative: Waxweiler, Jean et al
OFFICE DENNEMEYER S.à.r.l. P.O. Box 1502
L-1015 Luxembourg(LU)

(54) Improved method of phase control and measurement for propeller synchronizers.

(57) A method and apparatus for providing improved phase error measurement as shown and described. The measured phase error is used as an input to a SYNCHROPHASER® which provides for sphase control of a slave propeller with respect to a master. The phase error ($\phi_E$) is the sum of the sensed phase error and $360°$ divided by $N_p$ times $\phi_{COUNT}$ minus $\phi_{REF}$. $\phi_{COUNT}$ is a counted number of phase discontinuities which occur in $\phi_S$, the sensed phase. The values of $\phi_{COUNT}$ and $\phi_E$, measured phase output, may be limited in number and magnitude.

PRIOR ART PHASE ERROR MEASUREMENT

$$\phi_S \xrightarrow{+} \underset{10}{\bigcirc} \xrightarrow{} \phi_E \quad \left( \begin{array}{c} \text{TO SYNCHROPHASER} \\ \text{CONTROL-LAWS} \end{array} \right)$$

$$\phi_{REF}$$

IMPROVED PHASE ERROR MEASUREMENT

$$\phi_{REF} \longrightarrow \boxed{\begin{array}{c} \text{PHASE ERROR} \\ \text{MEASUREMENT} \\ \text{LOGIC} \end{array}}^{11} \longrightarrow \phi_E \quad \left( \begin{array}{c} \text{TO SYNCHROPHASER} \\ \text{CONTROL-LAWS} \end{array} \right)$$
$$\phi_S \longrightarrow$$

12 – DESCRIPTION OF PHASE ERROR MEASUREMENT LOGIC

$$\phi_{EV} = \phi_S + \frac{360}{N_p} \cdot \phi_{COUNT} - \phi_{REF}$$

$$\phi_E = \pm \text{ LIMITED VALUE OF } \phi_{EV}$$

WHERE:

$N_p$ = NUMBER OF PULSES PER REVOLUTION OF PROPELLER

$\phi_{COUNT}$ = UP/DOWN COUNT OF $\phi_S$ DISCONTINUITIES
ADD 1 TO $\phi_{COUNT}$ AT $\phi_S$ DECREASE-PHASE
SUBTRACT 1 FROM $\phi_{COUNT}$ AT $\phi_S$ INCREASE-PHASE
THEN LIMIT THE $\pm$ RANGE OF $\phi_{COUNT}$

WHEN SYNCHROPHASING IS INITIATED:

INITIALIZE $\phi_{COUNT}$ = 0.

FIG.6

## IMPROVED METHOD FOR SYNCHROPHASER® MEASUREMENT AND SYNCHROPHASER® CONTROL

Technical Field

This invention relates to aircraft driven by multiple propellers and/or engines and particularly to a SYNCHROPHASER® device of the type shown in U.S. Patents 4,569,283 and 4,653,981. This invention provides an improved method of measuring the phase relationship between the master and slave propeller.

Background Art

Propeller synchronizers or SYNCHROPHASER® have been used on multi-engine propeller driven aircraft to maintain a selected phase angle relationship between the master propeller and each of the designated slave propellers. Once the propellers are SYNCHROPHASED® or synchronized, the aircraft fuselage experiences minimum acoustic noise and vibration. The propeller SYNCHROPHASER® device provides relative phase angle for given slave propeller by changing the slave propeller speed. Prior art SYNCHROPHASERS® must respond to the magnitude of the phase error between the master and slave. Therefore, if the difference is very large, the SYNCHROPHASER® will either not function correctly, or will fail to provide for SYNCHROPHASING® of the propellers within a reasonable time.

In order to minimize noise in propeller driven aircraft, it is important to maintain a desired phase relationship among all aircraft propellers. Substantial noise reductions can be achieved by accurately maintaining the phase relationship among the propellers. This disclosure defines an improved method for measuring the phase relationship between two propellers.

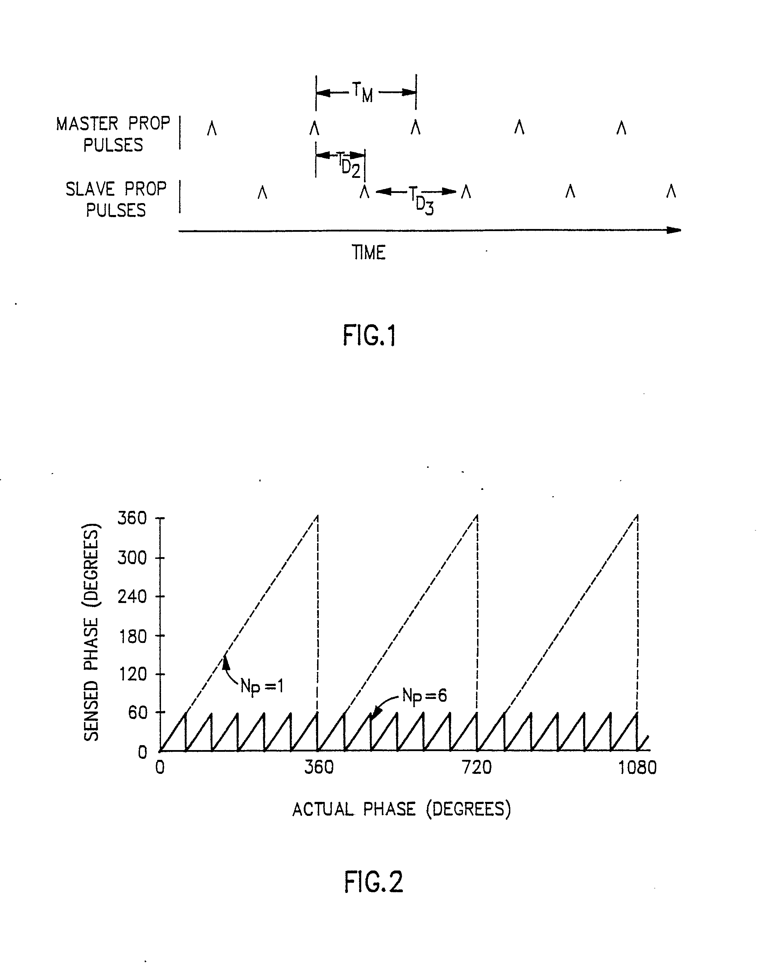

Present-day SYNCHROPHASERS® utilize an electrical pulse to detect the time that each propeller is at a particular blade orientation. The phase relation between any two propellers is then determined from the combination of the time between master pulses ($t_m$) and the time between a master pulse and slave propeller pulse ($t_d$). The time relationship between master propeller pulses and slave propeller pulses is shown in Figure 1. The phase sensing of Figure 1 is the measurement used to provide phase information to SYNCHROPHASER® controls of the type described above with respect to the prior art. Prior art propeller synchronizers use an electrical pulse to detect the times that each propeller is at a particular blade orientation.

The phase relation between any two propellers is then determined from a combination of a) measurement of the time interval between successive pulses from one propeller ($t_m$) and b) a measurement of the time delay of a pulse on one propeller to the next pulse from the second propeller ($t_d$). An example of the time relationship of the pulses from two propellers (designated master propeller and slave propeller) and the method for determining the propeller phase relationship ($\phi_S$) is shown in equation 1.

$$\phi_S = \frac{360}{NP} \frac{T_D}{T_M} \quad \text{DEGREES}$$

## EQUATION 1

Where NP is the number of pulses per revolution of the propeller.

In equation 1, an increasing delay in the interval ($T_d$) yields an increasing sensed phase ($\phi_S$) until the slave pulse is sufficiently delayed to occur with the next master pulse. As the pulses $t_d$ and $t_m$ align, the value of $t_d$ abruptly changes from the value of $t_m$ to 0, resulting in the sensed phase abruptly changing from a maximum value to 0. The sensed phase ($\phi_S$) in comparison to the actual phase is shown in Figure 2.

Phase error ($\phi_E$) is sensed phase $\phi_S$ minus a reference phase ($\phi_{REF}$) as shown in equation 2.

$(\phi_E) = \phi_S - \phi_{REF}$    EQUATION 2

The ($\phi_{REF}$) in equation 2 is the phase offset from perfect alignment of blades which is often necessary in providing the lowest noise synchronization of propellers. If minimum noise and vibration occur when the pulses from the master and slave propellers are coincident, then no $\phi_{REF}$ is required. $\phi_{REF}$ is determined by the characteristics of the particular aircraft and its engines.

The present SYNCHROPHASERS® typically utilize one electrical pulse per propeller revolution (NP = 1) so that sensed phase between discontinuities provide a phase error measurement up to $\pm 180°$. In addition, present SYNCHROPHASERS® utilize some form of "start circuit" to assure that the master and slave

EP 0 397 592 A2

propeller speeds are nearly the same so that the synchrophaser control laws can prevent the phase error from reaching the sign ambiguity that occurs at the phase measurement discontinuity.

DISCLOSURE OF THE INVENTION

This invention includes a method for eliminating the phase measurement discontinuity and associated phase error sign ambiguity in the SYNCHROPHASER® control laws, and in addition provides related improvements in propeller SYNCHROPHASING®. The basic procedure for eliminating the discontinuity is as follows:

1. Utilize the discontinuous phase measurement device which is detection of an electrical pulse each time the propeller is at a particular blade orientation and determination of the phase relation between any two propellers (pulses). This is the same as the prior art pulse and phase detection system described above.

2. In addition, this invention provides a device for summing the number of discontinuities in phase measurement (i.e., an up/down counter). One is added to the count when the phase discontinuity switches from a maximum to zero. Similarly, one is subtracted from the count when the phase discontinuity switches from zero to its maximum.

3. Next, the phase measurement and counted discontinuities are combined to yield a total phase measurement.

The foregoing and other objects, features and advantages of the present invention will become more apparent in the light of the foregoing description of the preferred embodiments thereof as illustrated in the accompanying drawings.

BRIEF DESCRIPTION OF THE DRAWINGS

Figure 1 shows a timing diagram of measurement used to provide information to SYNCHROPHASER® controls.

Figure 2 shows the sensed phase ($\phi_S$) in comparison with the actual phase.

Figure 3 shows a plot of the sensed phase measurement ($\phi_S$) against the actual phase between propellers.

Figure 4 is a plot of measured phase versus actual phase.

Figure 5 shows phase error measurement with limits on the phase count and on phase error magnitude.

Figure 6 shows a comparison of the prior art phase measurement of $\phi_E$ and the improved phase error measurement of this invention.

Figure 7 describes typical SYNCHROPHASER® control laws as used in the simulation model disclose herein.

Figure 8 shows phase error measurement logic with accommodation of large speed differences.

Figure 9 shows phase logic flow diagram of this invention.

Figure 10 shows additional phase logic which may be used between blocks 13 and 14 as depicted on Figure 9.

Figures 11 and 12 provide simulator data which demonstrate the initiation of SYNCHROPHASING® in accordance with this paragrpah.

Figure 13 shows the effect of a relatively large initial speed difference on the SYNCHROPHASER®.

Figure 14 shows the effect of PH sense as it passes through many phase continuities, and the lack of influence on PH error.

BEST MODE FOR CARRYING OUT THE INVENTION

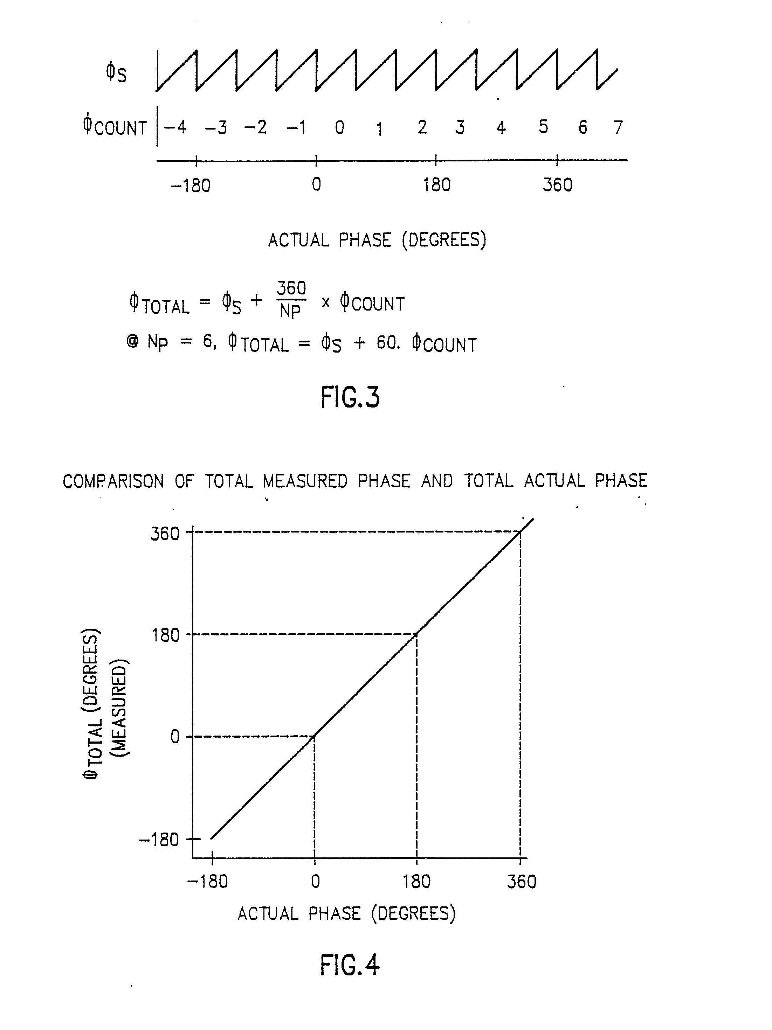

The improved method for phase measurement in accordance with this invention is set forth hereinbelow. In this example, a propeller having six electrical pulses per revolution (NP = 6) is described. A plot of the phase measurement $\phi_S$ and the phase count $\phi_{COUNT}$ versus actual phase between propellers is shown at Figure 3.

Figure 4 shows a plot of total measured phase versus the actual phase. The total measured phase is:

$$\phi_{TOTAL} = \phi_S + \frac{360}{NP}$$

3

$\phi_{COUNT} = \phi_S + 60 \phi_{COUNT}$     EQUATION 3

The phase error measurement $\phi_E$ is the total phase ($\phi_{TOTAL}$) less a referenced phase ($\phi_{REF}$). This is illustrated in equation 4 below.

$\phi_E = \phi_{TOTAL} - \phi_{REF}$     EQUATION 4

In equation 4, $\phi_{REF}$ is the desired phase shift between the master and slave propellers. This phase shift is determined empirically by measuring vibration and noise at different phase settings in an aircraft. Once the phase shift is determined at which minimum noise and vibration are experienced, the desired shift between the master and slave is known, and is commanded in the SYNCHROPHASER® control law as $\phi_{REF}$.

Combining equations 3 and 4, an expression for $\phi_E$, phase error, is obtained as shown in equation 5.

$$\phi_E = \phi_S + \frac{360}{NP}$$

$\phi_{COUNT} - \phi_{REF}$     EQUATION 5

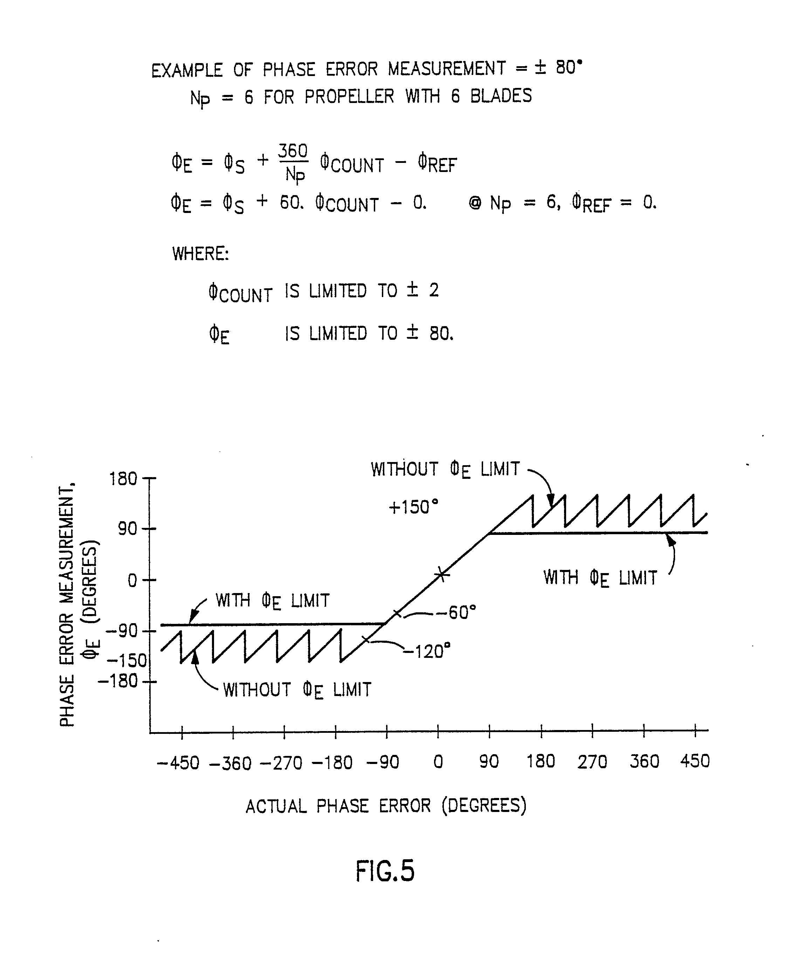

In the above equation, $N_p$ is the number of pulses per revolution of the propeller. It is also desired that the phase error measurement ($\phi_E$) range be consistent with the SYNCHROPHASER® control gain and SYNCHROPHASER® output authority limit. For example, if the propeller has six pulses per revolution and a phase error range ($\phi_E$) of $\pm 80°$ is desired, then the count must have a range of -2 to +2 as is indicated in Figure 5 as being ±2 or ±2 times 60° equals 120° in the positive and negative direction. Limiting the range of $\phi_{COUNT}$ limits the range in phase error measurement ($\phi_E$). The sensed phase ($\phi_S$) discontinuity yields a phase error measurement discontinuity in magnitude, but there is no ambiguity in the sign of the phase error.

Figure 5 also shows a limit of 2 on $\phi_{COUNT}$. A count of 1 contributes 60° and a count of 2 contributes 120° to phase error measurement. With the count limit at 2, the value of the phase measurement error is 120° plus $\phi_S$. Since $\phi_S$ is in the range of $\pm 30°$, then the phase error measurement is in the range of 90° to 150° as shown in equation 6 below.

$\phi_E = \phi_S + 60.^* \phi_{COUNT}$
$= \pm 30. + 60.^* 2$
$= \pm 30 + 120.$
$= 90°$ to $150°$     EQUATION 6

Similarly, a $\phi_{COUNT}$ of minus 2 (-2) will yield a phase error measurement in the range of -90° to -150°.

Some SYNCHROPHASER® control-laws may include dynamic compensation involving derivatives that are sensitive to the phase error discontinuity existing at large phase error measurement. These phase error discontinuities are eliminated by limiting the phase error magnitude as shown in Figure 5. The phase error limits in Figure 5 are the horizontal lines $\phi_{E\text{-limit}}$ which are at 80° and -80°. The 80° and -80° limits on phase error are seen on the phase error output or the vertical axis of Figure 5. The 80° and -80° limits on phase error measurement remove the saw tooth pattern in the plot of phase error measurement versus actual phase error shown in Figure 5.

The resulting phase error measurement $\phi_E$ has no discontinuities and no sign ambiguity. Many functional improvements in SYNCHROPHASING® therefore result from the use of the improved phase error measurement described herein. Significant functional improvements which result from this measurement of phase error are:

1. Control-laws as presently required for a SYNCHROPHASER® "start circuit" are not necessary and may be eliminated.

2. Control logic is eliminated for determining when to utilize the "start circuit" and when to utilize the "phase-control" circuit.

3. The number of electrical pulses per revolution of propeller can be increased up to one pulse per propeller blade. One pulse per blade allows use of every slave propeller blade for SYNCHROPHASING® rather than a select single blade. This multiple blade selection allows the time interval required to align the slave propeller to a master propeller to be reduced, and SYNCHROPHASING® to begin faster.

4. Increasing the electrical pulses to a pulse-per-blade increases the pulse frequency. Since these electrical pulses are usually also used for propeller speed measurement, the speed measurement dynamic lag is also reduced.

5. The phase error measurement range can be selected to be optimum for the SYNCHROPHASER® control-laws and is not limited or degraded by the number of electrical pulses per revolution of the propeller.

6. The limit on phase count determines the maximum amount of phase error that will be recovered. This slipping in phase decreases the SYNCHROPHASER® recovery time following a gross transient disturbance.

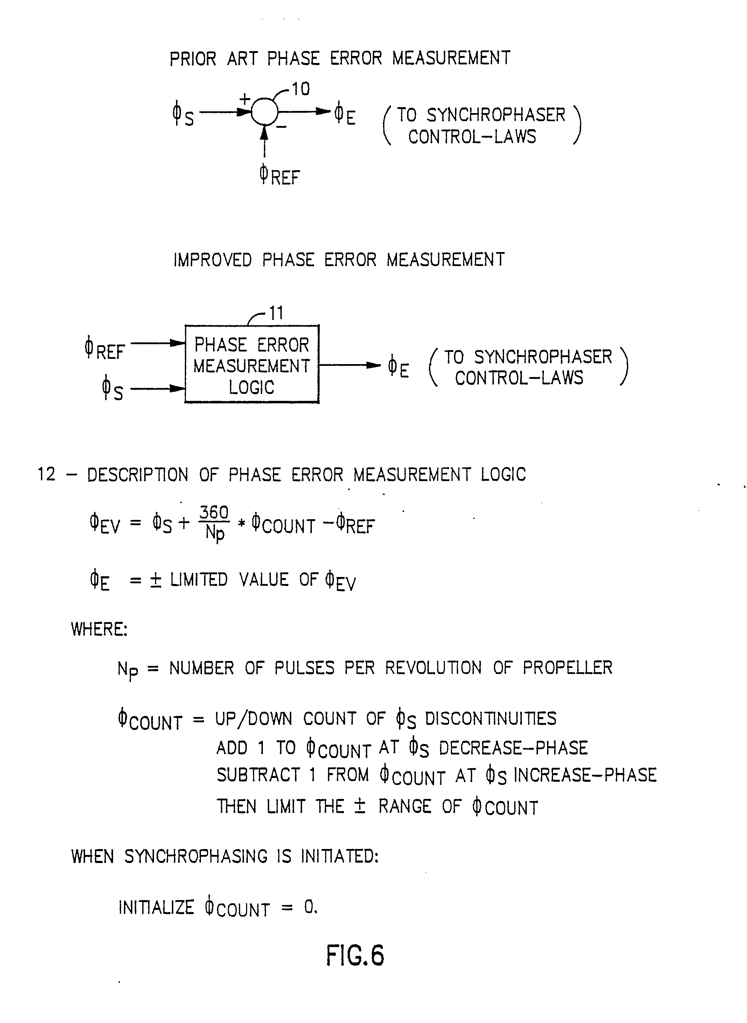

Referring now to Figure 6, there is shown in outline form the improvement provided by this invention.

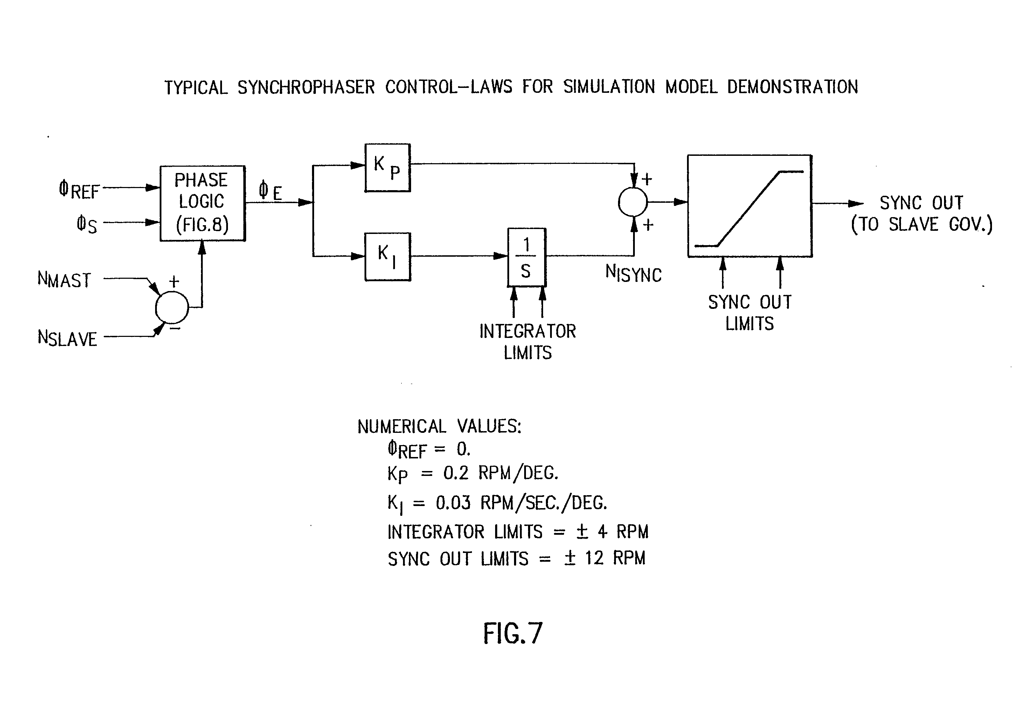

The prior art phase error measurement as shown at the top of Figure 6 was merely the comparison of a sensed phase with a reference phase at a summing junction 10. The output phase error from summing junction 10 is sent to a SYNCHROPHASER® as shown in Figure 7. Symbols used in Figure 7 are included in Table 1.

TABLE 1

DESCRIPTION OF SYMBOLS OF FIGURES 7, 9 AND 10

$K_I$ SYNCHROPHASER® Control-law Integral Gain
$K_P$ SYNCHROPHASER® Control-law Proportional Gain
$N_{ISYNC}$ SYNCHROPHASER® Control-law Integrator Output
$\phi_{COUNT}$ Count of phase discontinuities
$\phi_E$ Phase error measurement
$\phi_S$ Phase sensor measurement
$\phi_{SL}$ Previous value of phase sensor measurement
$\phi_{REF}$ Desired phase shift between master and slave pulses
NMAST Master propeller speed
NSLAVE Slave propeller speed

This invention as can be seen from block 11 of Figure 6 comprises a phase error measurement logic. Initially, an unlimited phase error $\phi_{EU}$ is determined as a function of the sensed propeller phase relation ($\phi_S$), the count, and the phase reference. The phase error is then limited by limiting the value of $\phi_{EU}$.

SELECTION OF SYNCHROPHASER® UPDATE TIME INTERVAL

The typical digital control used to provide the SYNCHROPHASER® logic also provides the control logic such as the logic for the engine control. Many sensed variables must be received into the engine control logic. The time interval required to input each sensed variable is determined, and the maximum permissible time interval between successive measurements of each sensed variable is determined. Since these measurements are input sequentially, a timing priority is also determined. Generally, SYNCHROPHASING® measurement has the lowest priority and consequently the longest time interval between successive phase measurements. A typical time interval between successive phase measurements and hence computations of SYNCHROPHASER® control logic is 0.2 seconds.

SELECTION OF THE RANGE OF PHASE ERROR, $\phi_E$

The desired range of phase error, $\phi_E$ is dependent on the value of SYNCHROPHASER® control gain and SYNCHROPHASER® output authority limit.

It is desired that the SYNCHROPHASER® gain be as high as possible to yield a quick transient response, however, the gain must be low enough to yield good dynamic stability. The choice of SYNCHROPHASER® gain is dependent upon the propeller governing characteristics and SYNCHROPHASER® update interval. Therefore, the choice of SYNCHROPHASER® gain is dependent upon the particular propulsion system characteristics.

The SYNCHROPHASER® output authority limit is selected to be as small as possible so that malfunctions cannot cause an excessive change in the speed of the slave propeller (S). However, SYNCHROPHASER® output must have sufficient authority to correct for typical control system tolerances and atmospheric disturbances. SYNCHROPHASER® output authority limit is typically in the range of ±1% to ±2.5% of propeller governing speed.

Once the SYNCHROPHASER® control gain and output authority limits have been determined, the desired maximum phase error ($\phi_E$ max) can be determined. The phase error range is selected so that the maximum phase error ($\phi_{E\ MAX}$) times the SYNCHROPHASER® proportional gain ($K_p$) yields a SYNCHROPHASER® output approximately equal to the SYNCHROPHASER® output authority limit as shown in Equation 7.

$$\phi_{E\ MAX} * K_p \cong SYNCHROPHASER\textregistered\ OUTPUT\ LIMIT$$

$$\phi_{E\ MAX} \cong \frac{SYNCHROPHASER\textregistered\ OUTPUT\ LIMIT}{K_p} = \frac{\pm 12}{0.2} = \pm 60°.$$

$$EQUATION\ 7$$

Note that $\phi_E$ max equals $\pm 80°$ was used in this example.

SELECTION OF RANGE LIMIT FOR COUNTING PHASE MEASUREMENT DISCONTINUITIES

The counter for $\phi_{COUNT}$ is an up/down counter of the number of phase measurement discontinuities as shown in equations 3 and 5. The counter range must be sufficiently large to synthesize the required phase error angle, $\phi_E$, where:

$$\phi_E = \phi_S + \frac{360}{NP}$$

$\phi_{COUNT} - \phi_{REF}$    EQUATION 8

In the case where $\phi_{REF}$ 0, $N_p = 6$ and $\phi_S = \pm 30$, the minimum value of $\phi_{COUNT}$ capable of yielding $\phi_E = \pm 80°$ for any value of $\phi_S$ is $\phi_{COUNT} = 2$. This is shown in the following equations.

$$\phi_E = \pm 30 + \frac{360}{6}$$

$$(2) - 0 = \pm 30 + 120 = 90°\ to\ 150° \qquad \phi_E = \pm 30 + \frac{360}{6}$$

$$(-2) - 0. = \pm 30 - 120 = -90\ to\ -150° \qquad EQUATION\ 9$$

Therefore, the phase count range limit in this example is selected to be $\pm 2$ counts.

DETECTION OF PHASE DISCONTINUITIES

The phase sensor, $\phi_S$, has a phase discontinuity magnitude equal to $360°$ divided by $N_p$. In the case where $N_p$ is equal to 6, the $\phi_S$ discontinuity magnitude is $60°$. One method for detecting the $\phi_S$ discontinuity is determining when a large change in $\phi_S$ has occurred between successive $\phi_S$ measurements. A large difference between the present sensed phase, $\phi_S$, and the previous sensed phase $\phi_{SL}$, indicates a sensor discontinuity has occurred. That is, $\phi_S$ minus $\phi_{SL}$ equals $60°$ is a phase sensed discontinuity. However, a speed difference between the master and slave propellers will influence the phase difference, $\phi_S$ minus $\phi_{SL}$ in a manner not related to the phase sensor discontinuity. Therefore, the phase measurement logic must be able to recognize the difference between $\phi_S$ minus $\phi_{SL}$ caused by a $\phi_S$ discontinuity and $\phi_S$ minus $\phi_{SL}$ caused by a difference in master and slave propeller speeds. It is apparent that the non-ambiguous theoretical $\phi_S$ minus $\phi_{SL}$ caused by a speed difference must be less than $\pm 50\%$ of the $\phi_S$ discontinuity (that is less than $\pm 30°$ in this example where $N_p$ equals 6). When $\phi_S$ minus $\phi_{SL}$ is more than $\pm 30°$, this indicates a $\phi_S$ discontinuity has occurred, and $\phi_S$ minus $\phi_{SL}$ less than $\pm 30°$ is caused by a speed difference. However, practical consideration should provide some separation in these two $\phi_S$ minus $\phi_{SL}$ bands. Therefore, a practical limit for $\phi_S$ minus $\phi_{SL}$ caused by a speed difference is $\pm 40\%$ of the sensed discontinuity. This is $\pm 24°$ when NP = 6 as shown in Equation 10 below.

$$\phi_S - \phi_{SL} = \pm 40\%\ of\ \frac{360}{NP} = 0.4 * \frac{360}{6} = \pm 24°$$

$$\pm 24°\ in\ 0.2\ SECONDS = \pm 120 \frac{DEGREES}{SECOND} = \pm 20.\ RPM$$

$$\therefore\ LARGE\ SPEED\ DIFFERENCE\ IS\ GREATER\ THAN\ \pm 20\ RPM$$

$$EQUATION\ 10$$

6

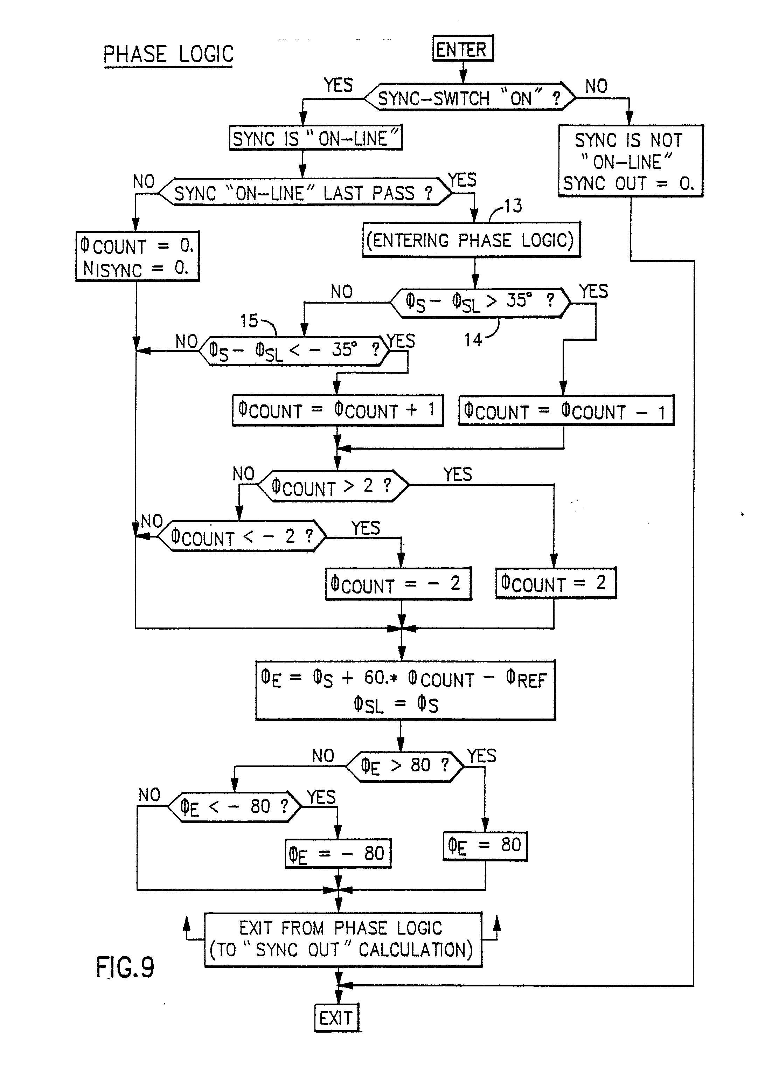

Then $\phi_S$ minus $\phi_{SL}$ discontinuities in excess of 60% of the sensor discontinuity ($\pm 36°$ for NP = 6) indicate a phase error discontinuity has occurred. In the example shown in Figure 9, $\phi_S$ minus $\phi_{SL}$ in excess of $\pm 35°$ (block 14 and block 15) indicates a phase error discontinuity has occurred. Large speed differences (speed differences yielding $\phi_S$ minus $\phi_{SL}$ in excess of 40% of the phase discontinuity) could result in an error in counting the number of phase discontinuities. Therefore, large speed differences must be detected and included in the logic to ensure non-ambiguous computation of $\phi_E$. The phase error measurement logic (reference number 12 in Figure 6) is modified to accommodate the result of a large speed difference between the master and slave propellers. The speed difference is called large whenever this speed difference yields a propeller phase difference in excess of 40% of $\phi_S$ measurement range in successive measurements. Therefore, a speed difference is defined to be large as set forth in Equation 11 below.

$$\text{DNMS} = \frac{24.}{\text{NP} * \text{DT}}$$

EQUATION 11

where DNMS is the speed difference in RPM between the master and slave propellers that is defined to be large

NP is number of pulses per propeller revolution

DT is time interval in seconds between successive $\phi_S$ sensor phase measurements

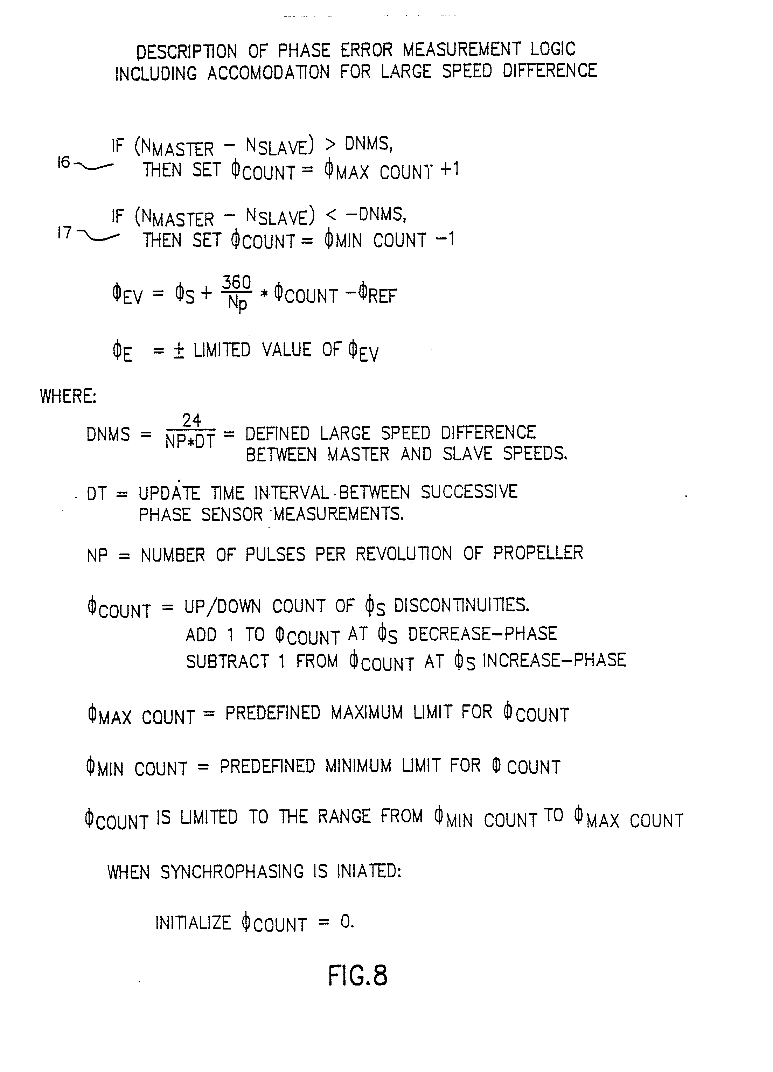

The description of phase error measurement logic in reference number 12 Figure 6 is modified to include logic for large speed differences as shown in Figure 8. This modification consists of setting $\phi_{COUNT}$ equal to the maximum $\phi_{COUNT}$ plus one whenever the master speed minus slave speed is greater than the defined large speed difference DNMS as shown in Figure 8, reference number 16. The modification also consists of setting $\phi_{COUNT}$ equal to the minimum $\phi_{COUNT}$ minus one whenever the master speed minus slave speed is less than the defined large speed difference (-DNMS) as shown in reference numeral 17. The logic having a $\phi_{COUNT}$ of maximum $\phi_{COUNT}$ plus one will assure that the subsequent phase error measurement logic will always result in a maximum value for phase error measurement. Also, the logic having a $\phi_{COUNT}$ of minimum $\phi_{COUNT}$ minus one will assure that the subsequent logic will always result in a minimum value for phase error measurement.

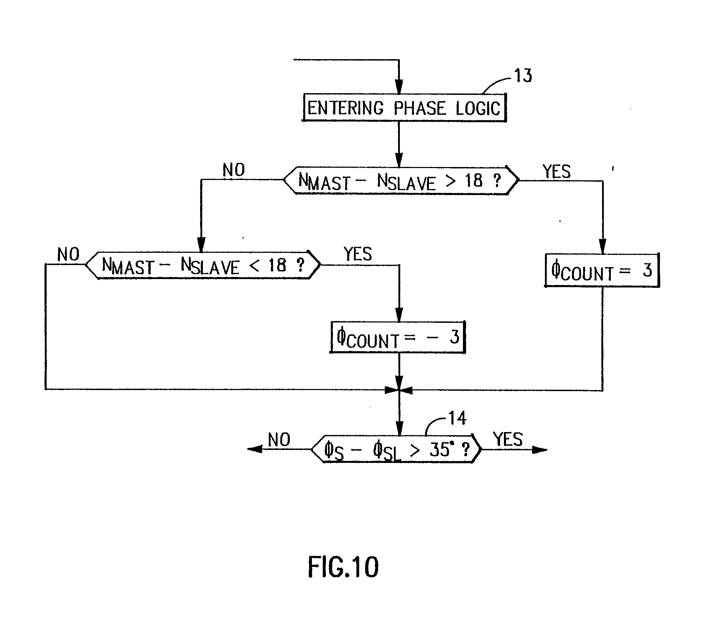

Consider the example where the number of pulses per propeller revolution (NP) is 6 and the $\phi_S$ sensor update interval (DT) is 0.2 seconds. Then use of equation 11 indicates that the speed difference DNMS in excess of 20 RPM is defined to be large. Figure 9 shows phase logic for this specific example to accomplish the phase error measurement logic described in general terms in Figure 6. Figure 10 shows an example of the phase logic modification as described in general terms in Figure 8, reference numerals 16 and 17. Symbols used in Figures 9 and 10 are defined in Table 1. Figure 9 utilizes 18 RPM as the defined large speed difference, DMNS. The logic in Figure 9 plus the logic in Figure 10 provides the complete logic set for phase error measurement logic in this example. The logic in Figure 10 is imbedded into the logic in Figure 9 at the location between "entering phase logic" block 13 and the decision block 14. Note that a speed difference of $\pm 18$ RPM with a 0.2 second update interval yields $\phi_S$-$\phi_{SL}$ equal $\pm 21.6°$ or 36% of the phase sensor discontinuity. The logic provides a non-ambiguous value of $\phi_E$ for any speed difference between master and slave propeller speeds.

SIMULATION OF SYNCHROPHASER® AND CONTROL WITH IMPROVED MEASUREMENT

The phase measurement logic can be implemented in a simple manner in a digital control, however, other means of implementation are possible. This SYNCHROPHASER® phase measurement technique has been modelled in a dynamic simulation model to demonstrate SYNCHROPHASING® a counter-rotating PROP-FAN® (CRP) having six blades per row. The CRP had independent speed governors to maintain the speed of each PROP-FAN® row at 1235 RPM. The PROP-FAN® aft-row was selected to be "master" and the forward-row was "slave". This SYNCHROPHASER® demonstration model utilized present-art SYNCHROPHASER® control-laws as shown in

Figure 7. The phase measurement logic described in this disclosure has been model led as shown in Figure 9 with modifications as shown in Figure 10. The optimum value of $\phi_E$ range in a typical

SYNCHROPHASER® is about [$\phi_E \times K_p$ = SYNC OUT LIMITS], see Equation 7. In this simulation example, the optimum $\phi_E$ range is -80° to +80°; so that the required range in $\phi_{COUNT}$ is from -2 to +2. It should be understood that the range of $\phi_E$ and $\phi_{COUNT}$ shown in Figure 9 can be adjusted as desired for other SYNCHROPHASER®. The phase measurement and SYNCHROPHASER® control-laws in this simulation model are computed once every 0.2 seconds.

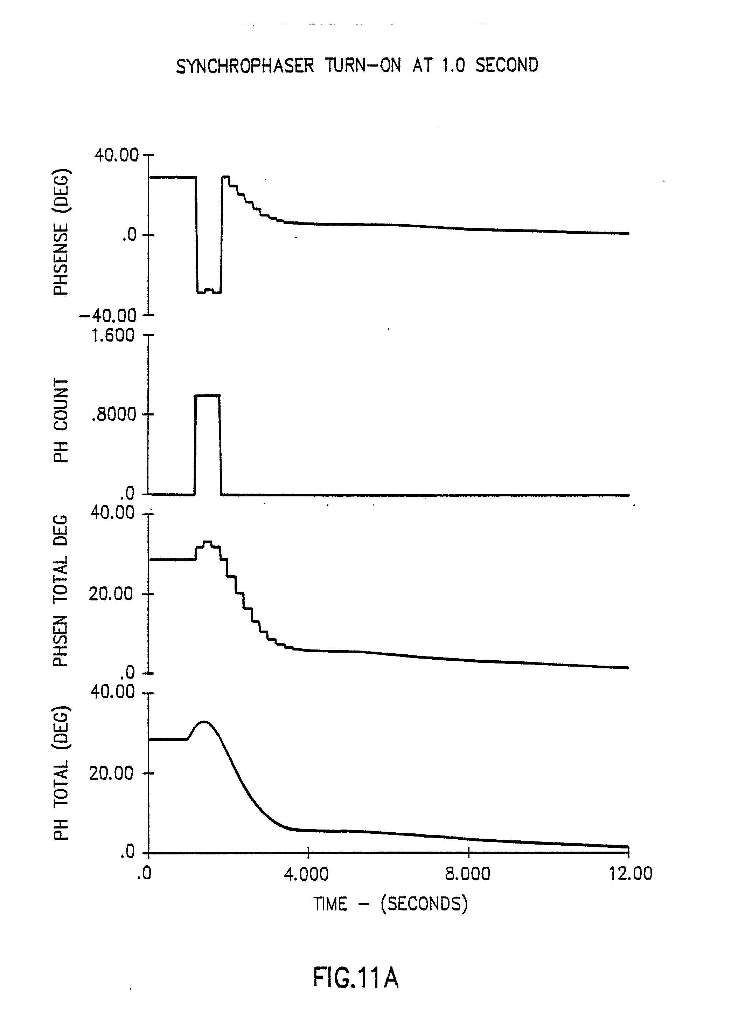

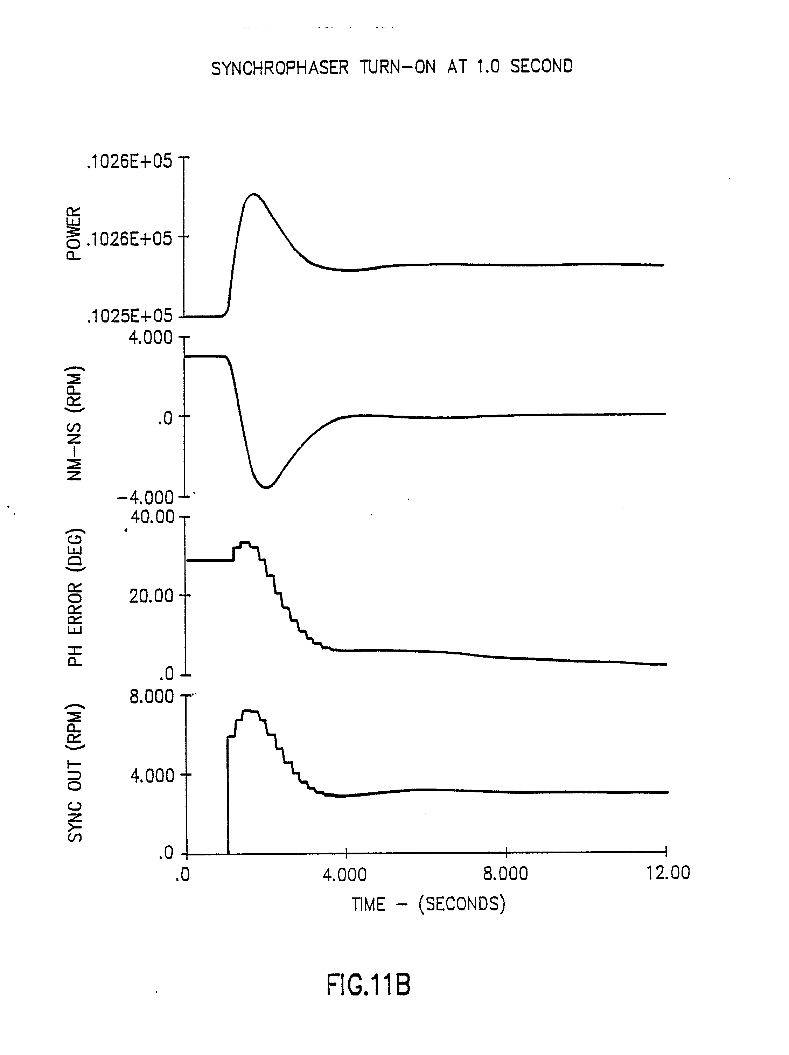

Dynamic simulation model functional performance results are shown in Figures 11 through 14. Each figure consists of eight variables plotted versus time. A description of the symbols for each of these eight plotted variables and the relation to the symbol used in the text is provided in Table 2.

TABLE 2

DEFINITION OF SYMBOLS IN SIMULATION MODEL PLOTTED VARIABLES

PHSENSE Phase sensor measurement ($\phi_S$ in text)

PH COUNT Count of phase discontinuities ($\phi_{COUNT}$ in text)

PHSEN TOTAL Total phase measurement ($\phi_{TOTAL}$ in text)

PH TOTAL Actual total phase

POWER Engine power delivered to the Prop Fan

NM-NS Master speed minus slave speed

PH ERROR Phase error measurement ($\phi_E$ in text)

SYNC OUT Synchrophaser output, which is a bias on the speed reference of the slave speed governor

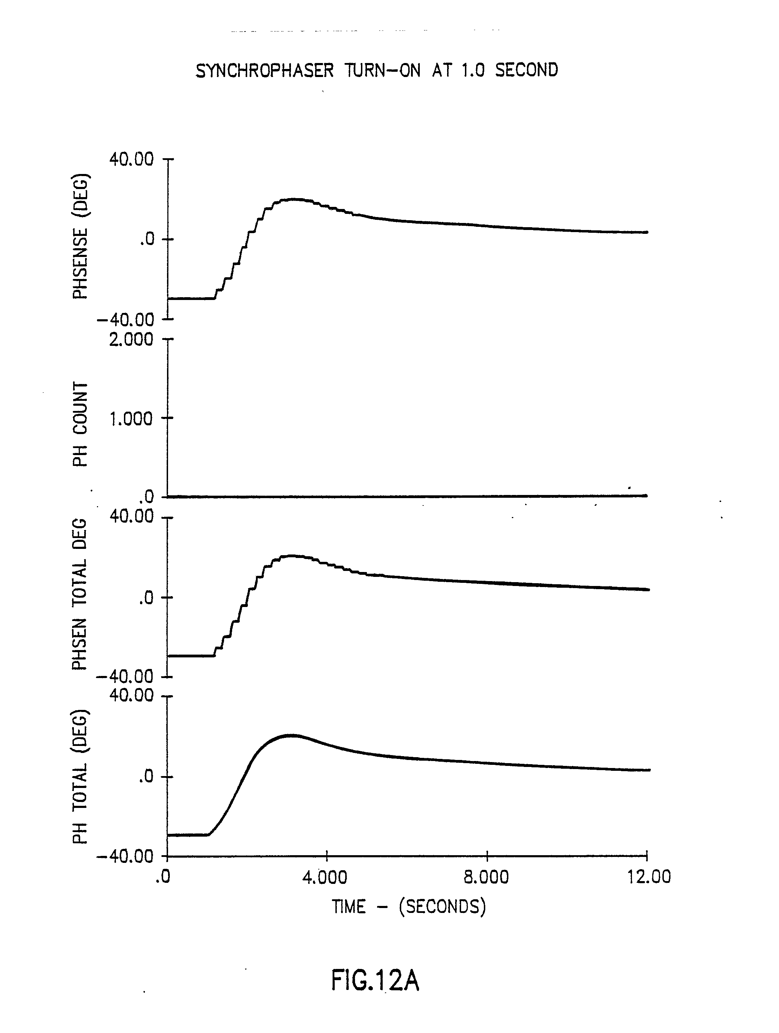

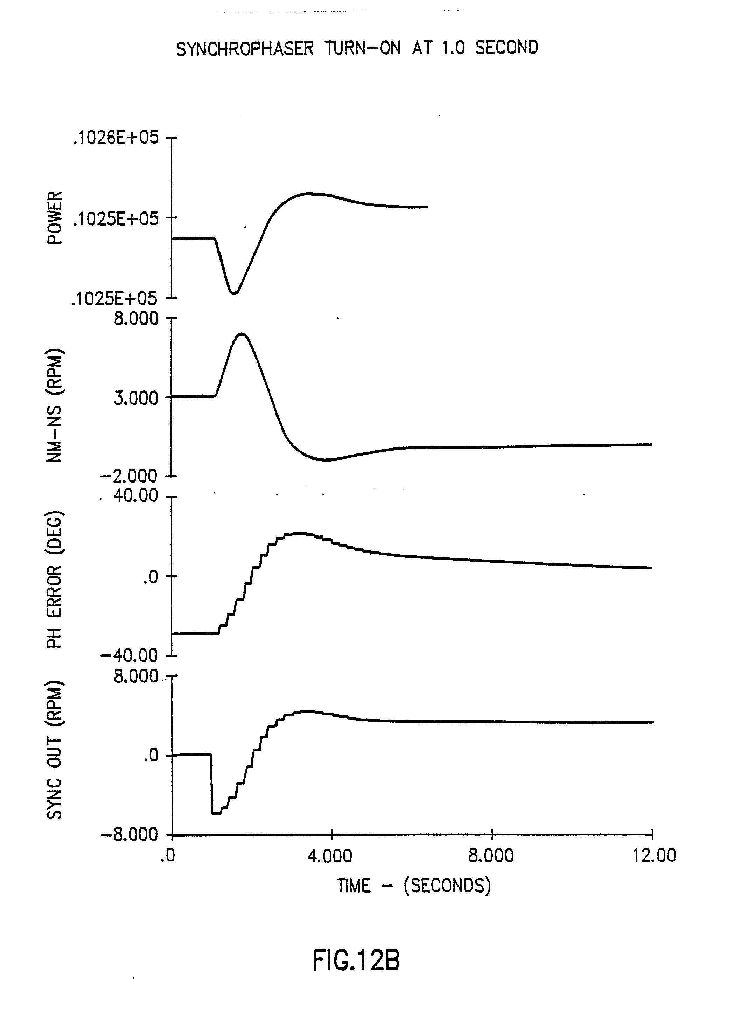

Figures 11 and 12 demonstrate the initiation of SYNCHROPHASING®. Initial slave speed is 0.25% (3 RPM) less than sthe master speed, which is a typical initial speed difference. SYNCHROPHASER® turn-on occurs at TIME = 1.0 second. The phase error when the SYNCHROPHASER® is turned on is +29° and -29° in Figures 11 and 12, respectively, which is essentially maximum phase error for a six-bladed propeller. These figures show that the SYNCHROPHASER® action (to minimize phase error) commences immediately after the SYNCHROPHASER® is turned on, and SYNCHROPHASES® the nearest slave PROP-FAN® blade to the master PROP-FAN® blade. Phase error is within 10° in 5 seconds after turn-on. Figure 11 shows PHSENSE passes through a region of measurement discontinuity, but PHSEN TOTAL, PH ERROR and SYNC OUT all show that this discontinuity has no adverse effect on the SYNCHROPHASER® performance.

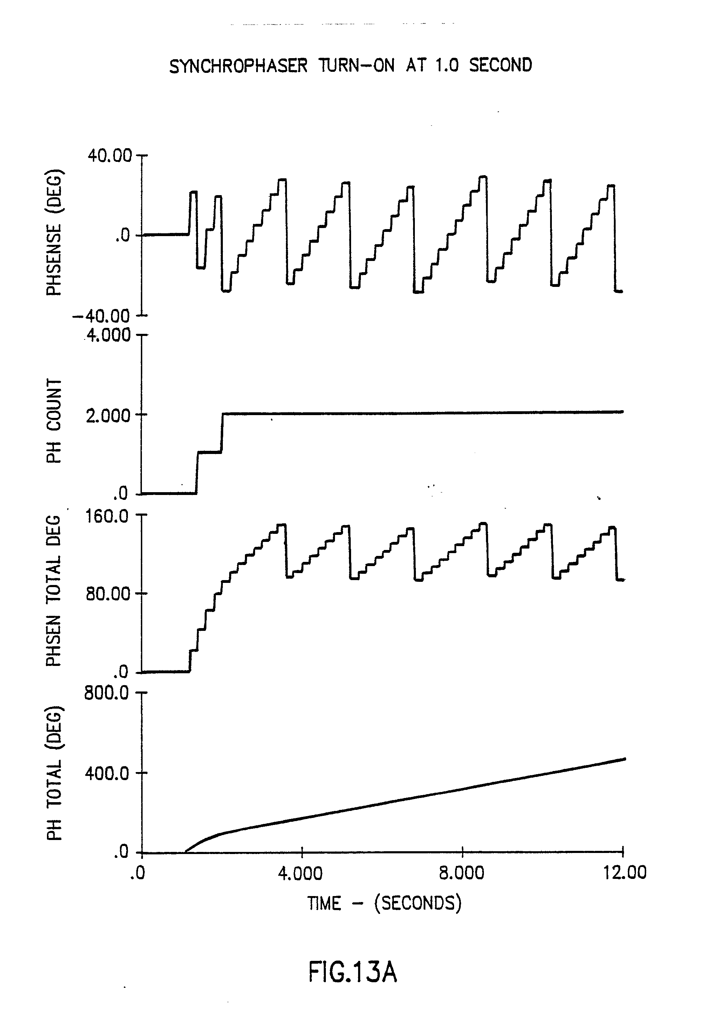

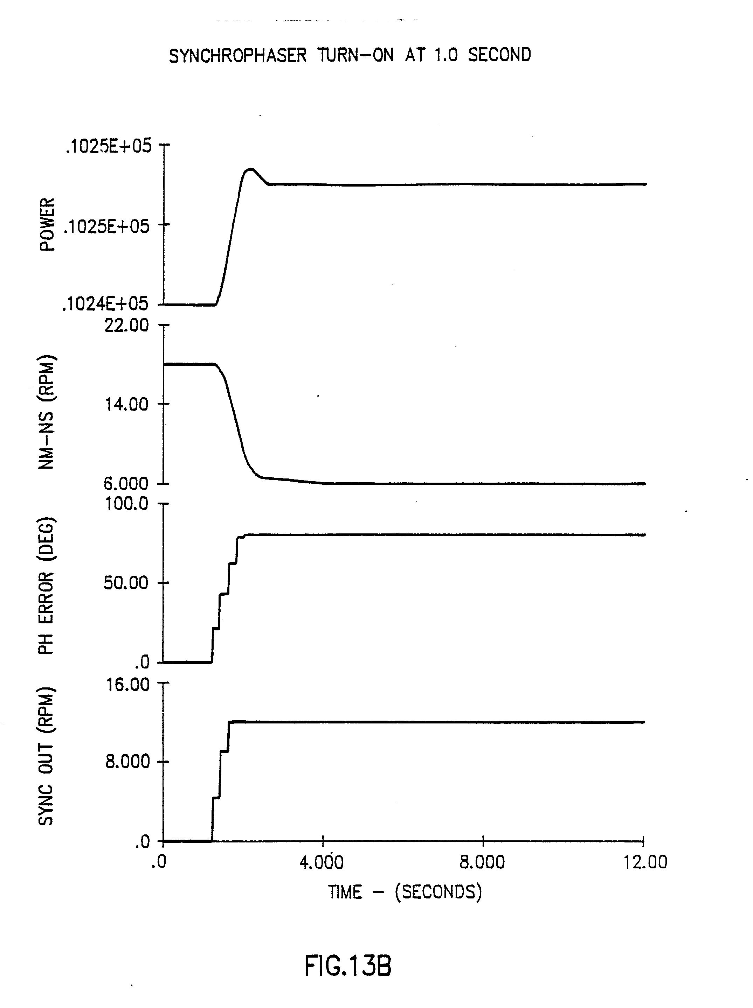

Figure 13 shows that a relatively large initial speed difference does not cause an ambiguity in the SYNCHROPHASER® control-laws. Slave PROP-FAN® steady state speed is initially 18 RPM (1.5%) less than master speed. SYNCHROPHASER® turn-on occurs at TIME = 1.0 second. SYNC OUT goes to +12 RPM (which is the SYNC OUT authority limit) without ambiguity. Slave speed responds by increasing RPM, but remains 6 RPM less than master speed. The slave PROP-FAN® continues to "slip", and PHSENSE repeatedly passes through discontinuities. There is no ambiguity in PH ERROR; and SYNC OUT consistently tries to increase slave speed.

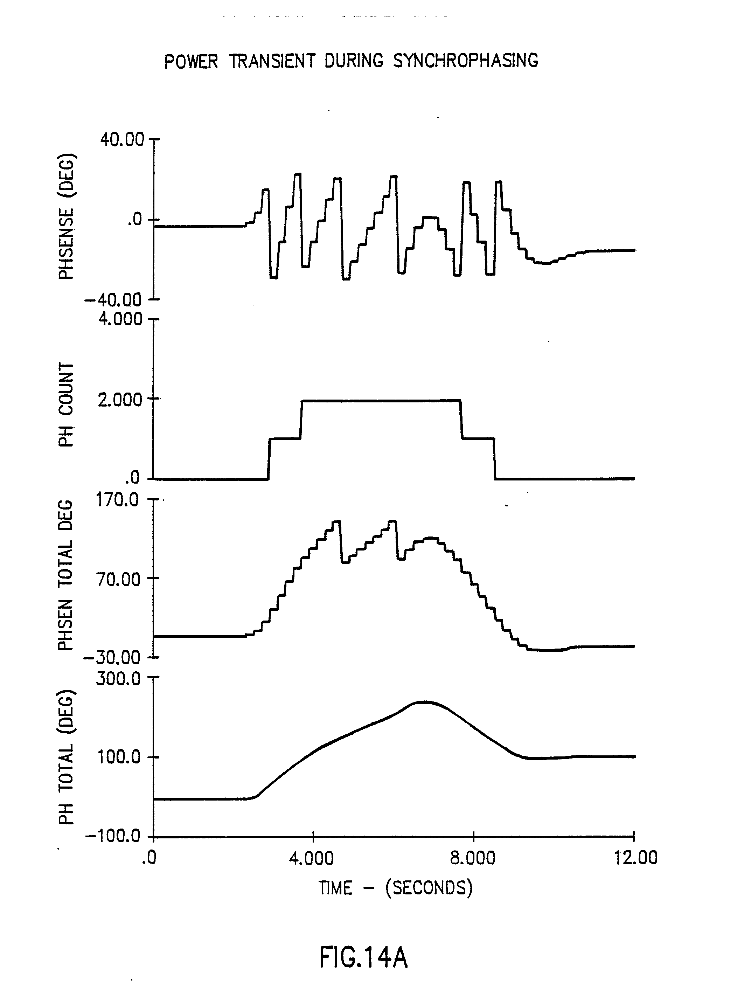

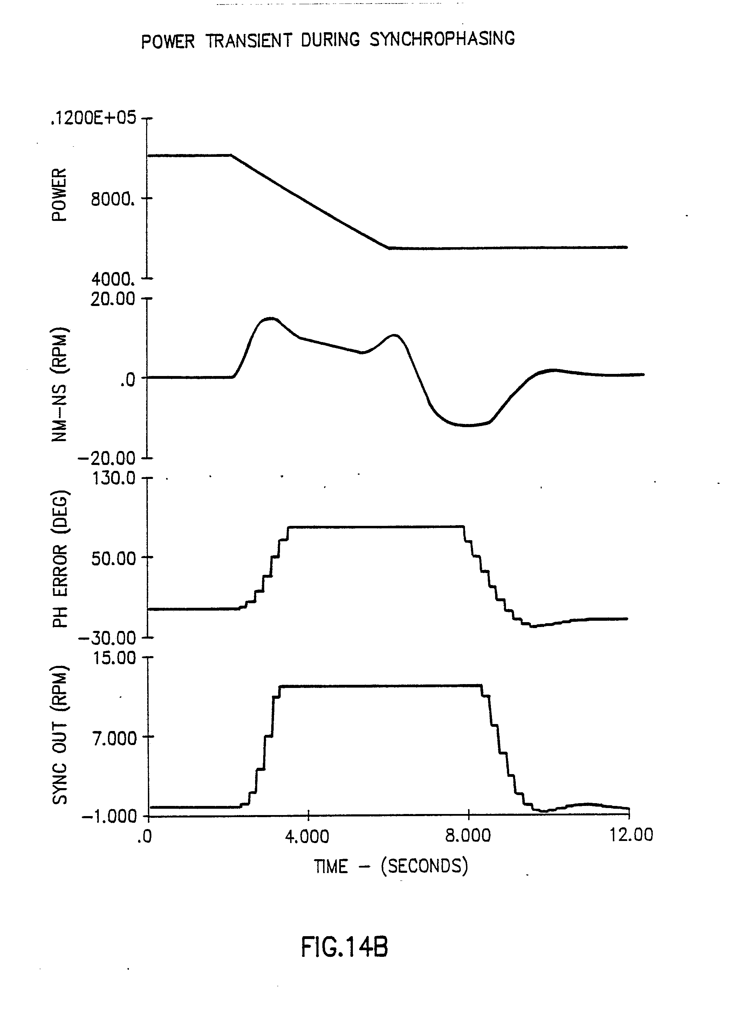

Figure 14 shows SYNCHROPHASING® when the master PROP-FAN® is from a separate engine, and master speed remains constant. The slave PROP-FAN® in this simulation model is the Counter Rotating Prop (CRP) forward row. The CRP has a decrease-power transient disturbance that causes the slave transient speed to decrease an amount in excess of the SYNCHROPHASER® output bias authority limit. Figure 14 shows that SYNC OUT becomes +12 RPM (which is the SYNC OUT authority limit) trying to increase slave PROP-FAN$^R$ speed. PH SENSE passes through many phase discontinuities, but these discontinuities have no influence on PH ERROR. PH ERROR is at +80°, correctly commanding an increase in slave speed. Note that PH SENSE shows discontinuities at TIME = 4.7 and 6.1 seconds that are not counted by PH COUNT. After the power transient is completed, PHE approaches zero-error but PH TOTAL approaches 120°. This demonstrates that the SYNCHROPHASER® has "slipped" two blades during this power transient, but recovers SYNCHROPHASING® without ambiguity. Note that a large phase error during gross transients is normal, being the result of limited authority in the SYNCHROPHASER® control laws. The "slip" during large transients is desirable, because it minimizes the time to recover SYNCHROPHASING® after the transient disturbance.

Although the invention has been shown and described with respect to a best mode embodiment thereof, it should be understood by those skilled in the art that the foregoing and various other changes, omissions and deletions in the form and detail thereof may be made therein without departing from the spirit and scope of this invention.

## Claims

1. An apparatus for measuring the phase between a master and a slave propeller on an aircraft comprising in combination:

means for summing the number of discontinuities in a phase measurement ($\phi_{COUNT}$);

means for multiplying the number of discontinuities by 360° and dividing the resultant by the number of pulses per revolution ($\phi_{COUNT}$ times 360° divided by $N_p$);

means for sensing the phase difference between the master propeller pulses and the slave propeller pulses ($\phi_S$); and

means for summing the phase difference between the master propeller pulses and the slave propeller pulses ($\phi_S$) and the number of discontinuities ($\phi_{COUNT}$) multiplied by 360° and divided by the number of pulses per revolution ($N_p$) to yield the total sensed phase between the master and slave ($\phi_{TOTAL}$).

2. The apparatus of claim 1 further including means for adding the desired phase shift ($\phi_{REF}$) between said master and slave to said total sensed phase ($\phi_{TOTAL}$).

3. The apparatus of claim 1 where the value of $\phi_{COUNT}$ (number of discontinuities) is limited to an amount which provides a range in degrees which is less than a predetermined amount.

4. The apparatus in accordance with claim 3 wherein said range is consistent with the SYNCHROPHASER[R] control gain and SYNCHROPHASER[R] output biased authority limit.

5. The apparatus of claim 3 wherein said range limit is an integral amount.

6. The apparatus of claim 3 wherein said predetermined amount is an amount which exceeds a limit placed on the phase error measured ($\phi_E$).

7. The apparatus of claim 1 wherein said means for summing of the number of phase discontinuities adds one to the discontinuity count ($\phi_{COUNT}$) when the discontinuity decreases and subtracts one from the count when the discontinuity increases.

8. The apparatus of claim 3 wherein if the speed of the master exceeds that of the slave by a predetermined amount, the value of $\phi_{COUNT}$ will have an additional amount added to it.

9. The apparatus of claim 8 wherein if the speed of the master exceeds from the speed of the slave by 18 or more RPM, the value of $\phi_{COUNT}$ will have an additional amount added to it.

10. The apparatus of claim 3 wherein said speed of the master is much less than the slave, the value of $\phi_{COUNT}$ will have an amount subtracted from it.

11. The apparatus of claim 8 wherein said speed difference between said master and slave is an inherent propeller characteristic of the relation between speed difference and change in phase with time.

12. The apparatus of claim 3 wherein a limit is placed on the magnitude of error measured, ($\phi_E$).

13. The apparatus of claim 12 wherein said limit on the magnitude of phase error ($\phi_E$) eliminates phase error discontinuities existing at larger phase error measurements.

14. The apparatus of claim 12 wherein said limit on phase error ($\phi_E$) is ±80°.

FIG.1

FIG.2

EP 0 397 592 A2

$\phi_S$

$\phi_{COUNT}$ | −4  −3  −2  −1  0  1  2  3  4  5  6  7

−180    0    180    360

ACTUAL PHASE (DEGREES)

$$\phi_{TOTAL} = \phi_S + \frac{360}{N_P} \times \phi_{COUNT}$$

$$@ \; N_P = 6, \; \phi_{TOTAL} = \phi_S + 60. \; \phi_{COUNT}$$

## FIG.3

COMPARISON OF TOTAL MEASURED PHASE AND TOTAL ACTUAL PHASE

$\phi_{TOTAL}$ (DEGREES) (MEASURED)

ACTUAL PHASE (DEGREES)

## FIG.4

EXAMPLE OF PHASE ERROR MEASUREMENT = ± 80°

$N_P$ = 6 FOR PROPELLER WITH 6 BLADES

$$\phi_E = \phi_S + \frac{360}{N_P}\phi_{COUNT} - \phi_{REF}$$

$$\phi_E = \phi_S + 60.\ \phi_{COUNT} - 0. \qquad @\ N_P = 6,\ \phi_{REF} = 0.$$

WHERE:

$\phi_{COUNT}$  IS LIMITED TO ± 2

$\phi_E$    IS LIMITED TO ± 80.

FIG.5

PRIOR ART PHASE ERROR MEASUREMENT

$\phi_S \longrightarrow$ + ⊙ $\xrightarrow{-10}$ $\phi_E$ $\left( \begin{array}{c} \text{TO SYNCHROPHASER} \\ \text{CONTROL-LAWS} \end{array} \right)$

−

↑

$\phi_{REF}$

IMPROVED PHASE ERROR MEASUREMENT

$\phi_{REF} \longrightarrow$ | $\overset{-11}{\text{PHASE ERROR}}$ MEASUREMENT LOGIC | $\longrightarrow \phi_E$ $\left( \begin{array}{c} \text{TO SYNCHROPHASER} \\ \text{CONTROL-LAWS} \end{array} \right)$

$\phi_S \longrightarrow$

12 − DESCRIPTION OF PHASE ERROR MEASUREMENT LOGIC

$$\phi_{EV} = \phi_S + \frac{360}{N_p} * \phi_{COUNT} - \phi_{REF}$$

$$\phi_E = \pm \text{ LIMITED VALUE OF } \phi_{EV}$$

WHERE:

$N_p$ = NUMBER OF PULSES PER REVOLUTION OF PROPELLER

$\phi_{COUNT}$ = UP/DOWN COUNT OF $\phi_S$ DISCONTINUITIES
ADD 1 TO $\phi_{COUNT}$ AT $\phi_S$ DECREASE−PHASE
SUBTRACT 1 FROM $\phi_{COUNT}$ AT $\phi_S$ INCREASE−PHASE
THEN LIMIT THE $\pm$ RANGE OF $\phi_{COUNT}$

WHEN SYNCHROPHASING IS INITIATED:

INITIALIZE $\phi_{COUNT}$ = 0.

FIG.6

TYPICAL SYNCHROPHASER CONTROL-LAWS FOR SIMULATION MODEL DEMONSTRATION

NUMERICAL VALUES:
  $\Phi_{REF}$ = 0.
  $K_P$ = 0.2 RPM/DEG.
  $K_I$ = 0.03 RPM/SEC./DEG.
  INTEGRATOR LIMITS = ± 4 RPM
  SYNC OUT LIMITS = ± 12 RPM

FIG.7

EP 0 397 592 A2

DESCRIPTION OF PHASE ERROR MEASUREMENT LOGIC
INCLUDING ACCOMODATION FOR LARGE SPEED DIFFERENCE

16 — IF $(N_{MASTER} - N_{SLAVE}) > DNMS,$
    THEN SET $\phi_{COUNT} = \phi_{MAX\ COUNT} +1$

17 — IF $(N_{MASTER} - N_{SLAVE}) < -DNMS,$
    THEN SET $\phi_{COUNT} = \phi_{MIN\ COUNT} -1$

$$\phi_{EV} = \phi_S + \frac{360}{N_p} * \phi_{COUNT} - \phi_{REF}$$

$$\phi_E = \pm \text{ LIMITED VALUE OF } \phi_{EV}$$

WHERE:

$DNMS = \dfrac{24}{NP*DT} =$ DEFINED LARGE SPEED DIFFERENCE
BETWEEN MASTER AND SLAVE SPEEDS.

DT = UPDATE TIME INTERVAL BETWEEN SUCCESSIVE
PHASE SENSOR MEASUREMENTS.

NP = NUMBER OF PULSES PER REVOLUTION OF PROPELLER

$\phi_{COUNT}$ = UP/DOWN COUNT OF $\phi_S$ DISCONTINUITIES.
ADD 1 TO $\phi_{COUNT}$ AT $\phi_S$ DECREASE-PHASE
SUBTRACT 1 FROM $\phi_{COUNT}$ AT $\phi_S$ INCREASE-PHASE

$\phi_{MAX\ COUNT}$ = PREDEFINED MAXIMUM LIMIT FOR $\phi_{COUNT}$

$\phi_{MIN\ COUNT}$ = PREDEFINED MINIMUM LIMIT FOR $\phi_{COUNT}$

$\phi_{COUNT}$ IS LIMITED TO THE RANGE FROM $\phi_{MIN\ COUNT}$ TO $\phi_{MAX\ COUNT}$

WHEN SYNCHROPHASING IS INIATED:

INITIALIZE $\phi_{COUNT} = 0.$

FIG.8

PHASE LOGIC

FIG.9

FIG.10

EP 0 397 592 A2

SYNCHROPHASER TURN—ON AT 1.0 SECOND

FIG.11A

SYNCHROPHASER TURN-ON AT 1.0 SECOND

FIG.11B

SYNCHROPHASER TURN—ON AT 1.0 SECOND

FIG.12A

SYNCHROPHASER TURN—ON AT 1.0 SECOND

FIG.12B

FIG.13A

SYNCHROPHASER TURN—ON AT 1.0 SECOND

FIG.13B

POWER TRANSIENT DURING SYNCHROPHASING

FIG.14A

POWER TRANSIENT DURING SYNCHROPHASING

FIG.14B